# EUROPEAN PATENT APPLICATION

(11) **EP 4 675 884 A1**
(43) Date of publication of application: **07.01.2026**
(21) Application number: 25185946.8
(22) Date of filing: 27.06.2025
(51) Int. Cl.: H02J 7/00, G01L 3/10, H04B 5/26, H02J 50/10, H02J 50/80, H02J 50/00, H02J 50/90, H04B 5/79, H02J 50/12

(54) **WIRELESS TRANSMISSION SYSTEM**

(30) Priority: 03.07.2024 CN 202410885300
(71) Applicant: TDK Corporation, Tokyo 103-6128 (JP)
(72) Inventor: CHEN, Mao-Chun, 326 Taoyuan City (TW); YU, Tai-Hsien, 326 Taoyuan City (TW); LEE, Kuo-Jui, 326 Taoyuan City (TW)
(74) Representative: Hoefer & Partner Patentanwälte mbB

(57) **Abstract**

A wireless transmission system (10) includes a first transmission module (100) and a second transmission module (200). The first transmission module (100) has a first coil (111). The second transmission module (200) has a second coil (211) corresponding to the first coil (111). The first transmission module (100) is configured to transmit a first signal to the second coil (211) of the second transmission module (200) through the first coil (111).

## Description

### CROSS REFERENCE TO RELATED APPLICATIONS

This application claims the benefit of China Application No. 202410885300.6, filed on July 03, 2024, the entirety of which is incorporated by reference herein.

### BACKGROUND OF THE INVENTION

### Field of the Disclosure

The present disclosure relates in general to a wireless transmission system, and in particular it relates to a wireless transmission system used in wireless communication or wireless charging.

### Description of the Related Art

With the development of science and technology, many products now have power-assisted functions. A power-assist module can provide power to help the user to use the product more easily. For example, power-assist module can be used in products such as electric bicycles and fishing reels. Due to their convenience, products with power-assist modules are gradually becoming popular in the public marketplace.

Generally speaking, a sensor needs to be installed on a power-assist module, and a traditional sensor transmits data through wires. To provide the power required by the sensor, an additional power line is required. Therefore, when installed on products with rotating motors, long-term use may easily cause the power lines and transmission lines to bend, which may lead to faults such as breakage of the power lines and transmission lines.

Therefore, how to design a transmission system that can overcome the above shortcomings is topic nowadays that needs to be discussed and solved.

### BRIEF SUMMARY OF THE INVENTION

Accordingly, one objective of the present disclosure is to provide a wireless transmission system to solve the above problems. A wireless transmission system according to the invention is defined in independent claim 1. The dependent claims define preferred embodiments thereof.

According to some embodiments of the disclosure, a wireless transmission system includes a first transmission module and a second transmission module. The first transmission module has a first coil. The second transmission module has a second coil corresponding to the first coil. The first transmission module is configured to transmit a first signal to the second coil of the second transmission module through the first coil.

According to some embodiments, the first transmission module includes a first power source and a first signal processing assembly. The first signal processing assembly is configured to control the first coil. The second transmission module includes a second signal processing assembly and a first sensing assembly. The second signal processing assembly is configured to control the second coil. The first sensing assembly is configured to output a first sensing signal to the second signal processing assembly. The second transmission module is configured to transmit a second signal to the first coil of the first transmission module via the second coil. When the wireless transmission system is in a first time section, the second signal processing assembly converts the first signal into a first electrical signal. The first electrical signal is optionally input to the first sensing assembly. The first transmission module further includes a first computing element.

According to some embodiments, when the wireless transmission system is in a second time section which is different from the first time section, the first signal processing assembly converts the second signal into a second electrical signal and inputs the second electrical signal to the first computing element. The extreme value of the first signal is different from the extreme value of the second signal. The extreme value of the first signal is greater than the extreme value of the second signal. The extreme value of the first signal is at least twice the extreme value of the second signal.

According to some embodiments, the second transmission module further includes a second sensing assembly which is configured to output a second sensing signal to the second signal processing assembly. The second signal processing assembly outputs the second signal according to the first sensing signal and the second sensing signal. The second signal processing assembly outputs the second signal according to preset information. The preset information is measured and defined by an external device and then recorded to the second transmission module.

According to some embodiments, the wireless transmission system further includes a driving assembly configured to drive the first transmission module and the second transmission module to move relative to each other. The driving assembly is configured to operate according to a driving signal output by the first computing element of the first transmission module. The first transmission module is configured to output the driving signal according to the second electrical signal.

According to some embodiments, when the second signal processing assembly determines that the first sensing signal meets a first condition according to the preset information, the second signal processing assembly outputs the second signal including first mode information to the first signal processing assembly. When the second sensing signal meets the first condition, the second signal processing assembly outputs the second signal including the first mode information to the first signal processing assembly according to the preset information. When the first transmission module receives the second signal including the first mode information, the driving assembly drives the first transmission module and the second transmission module to move relative to each other in a first mode.

According to some embodiments, when the second signal processing assembly determines that the first sensing signal meets a second condition according to the preset information, the second signal processing assembly outputs the second signal including second mode information to the first signal processing assembly. When the second sensing signal meets the second condition, the second signal processing assembly outputs the second signal including the second mode information to the first signal processing assembly according to the preset information. When the first transmission module receives the second signal including the second mode information, the driving assembly drives the first transmission module and the second transmission module to move relative to each other in a second mode.

According to some embodiments, when the second signal processing assembly determines that the first sensing signal meets a third condition according to the preset information, the second signal processing assembly outputs the second signal including third mode information to the first signal processing assembly. When the first transmission module receives the second signal including the third mode information, the first transmission module outputs the first signal in a third mode.

According to some embodiments, when the second signal processing assembly determines that the first sensing signal meets a fourth condition according to the preset information, the second signal processing assembly outputs the second signal including fourth mode information to the first signal processing assembly. When the first transmission module receives the second signal including the fourth mode information, the first transmission module outputs the first signal in a fourth mode. The first signal is different from the second signal.

According to some embodiments, the power required by the first sensing assembly is provided directly by the second signal processing assembly and does not pass through any power storage components between the first sensing assembly and the second signal processing assembly. The second signal processing assembly is configured to provide power to the first sensing assembly in the first time section. The length of the first time section is different from the length of the second time section.

According to some embodiments, the length of the first time section is greater than the length of the second time section. The first signal processing assembly and the first computing element are integrally formed as one piece. When the wireless transmission system is in a turn-on mode, the first signal continues to be transmitted to the second coil via the first coil. When the wireless transmission system is in the turn-on mode, the second signal continues to be transmitted to the first coil via the second coil. When the wireless transmission system is in the turn-on mode, the first time section and the second time section alternate.

According to some embodiments, the second transmission module further includes a second power source, and the second signal processing assembly transmits the first electrical signal to the second power source. The second power source outputs a third electrical signal to the first sensing assembly. The second transmission module further includes a third sensing assembly. The second power source is configured to output a fourth electrical signal and a fifth electrical signal to the second sensing assembly and the third sensing assembly respectively. The third sensing assembly is configured to sense power of the second power source and to correspondingly output a third sensing signal to the second signal processing assembly. The second signal processing assembly is configured to monitor the power of the second power source according to the third sensing signal. When the first transmission module does not transmit the first signal to the second transmission module, the maximum power of the second power source of the second transmission module is less than 200mAh.

According to some embodiments, the second transmission module further includes a security assembly which is electrically connected to the second power source. When the first transmission module does not transmit the first signal to the second transmission module for more than a first preset time, the security assembly discharges the power of the second power source to a safety value in a second preset time. The security assembly is configured to convert electrical energy of the second power source into thermal energy.

According to some embodiments, the first preset time is less than 6 hours. The second preset time is less than 1 hour. The safety value is defined as half of the maximum power of the second power source. The second signal processing assembly is configured to monitor and determine whether the power of the second power source reaches the safety value according to the third sensing signal.

According to some embodiments, the wireless transmission system further includes a separating member which is disposed between the first coil and the second coil. The separating member includes metal material. The frequency of the first signal with periodicity is greater than 1MHz. The frequency of the second signal with periodicity is greater than 1MHz.

According to some embodiments, the separating member has a plurality of perforations. When viewed along the winding axis of the first coil, the boundary of the first coil surrounds and defines a first area. When viewed along the winding axis of the first coil, the area of the metal part of the separating member is less than half of the first area. When viewed along the winding axis of the second coil, the boundary of the second coil surrounds and defines a second area. When viewed along the winding axis of the second coil, the area of the metal part of the separating member is less than half of the second area.

According to some embodiments, the separating member defines a first block and a second block. The first block has a third area. The second block surrounds the first block and has a fourth area. The proportion of metal of the separating member in the first block is different from the proportion of metal of the separating member in the second block.

According to some embodiments, the proportion of metal of the separating member in the first block is less than the proportion of metal of the separating member in the second block. The perforations include a plurality of first perforations and a plurality of second perforations, which are respectively arranged in the first block and the second block. The ratio of the total area of the first perforations to the third area is different from the ratio of the total area of the second perforations to the fourth area. The ratio of the total area of the first perforations to the third area is greater than the ratio of the total area of the second perforations to the fourth area.

According to some embodiments, the first transmission module has a first casing. At least a portion of the first casing is located between the first coil and the second coil. The first casing has non-metallic material. The second transmission module has a second casing. At least a portion of the second casing is located between the first coil and the second coil. The second casing has non-metallic material.

According to some embodiments, the separating member is disposed on the first casing or the second casing. At least a portion of the separating member is embedded in the first casing or the second casing.

The present disclosure provides a wireless transmission system, including a first transmission module and a second transmission module. The second transmission module is movably connected to the first transmission module. The first transmission module is configured to transmit a first signal to the second coil of the second transmission module via the first coil. The second signal processing assembly of the second transmission module can convert the first signal into an electrical signal to provide power to one or more sensing assemblies to sense parameters such as rotation speed or torque of the second transmission module.

After receiving the sensing signals of these sensing assemblies, the second signal processing assembly determines whether these sensing signals meet specific conditions according to preset information, such as low rotation speed and high torque or high rotation speed and low torque, and so on, and corresponding transmits a second signal to the first transmission module through the second coil. The first transmission module correspondingly controls a driving assembly according to the second signal to change parameters such as rotation speed or torque of the second transmission module.

The wireless transmission system of the present disclosure can be applied to products such as electric bicycles or fishing reels, and can provide auxiliary power to assist the user according to the user's usage situation. Furthermore, because the coil and the electronic components on the rotor (such as the second transmission module) do not need external wires for power supply or communication, the problem of the conventional rotating module tearing the wires during rotation can be avoided.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a schematic diagram of a wireless transmission system 10 according to an embodiment of the present disclosure.
FIG. 2 is a functional block diagram of the wireless transmission system 10 according to an embodiment of the present disclosure.
FIG. 3 is a signal diagram of a first turn-on signal and a second turn-on signal relative to time according to an embodiment of the present disclosure.
FIG. 4 is a functional block diagram of a wireless transmission system 10A according to another embodiment of the present disclosure.
FIG. 5 is a top view of a partial structure of the wireless transmission system 10 when viewed in a first direction D1 in FIG. 1 according to an embodiment of the present disclosure.
FIG. 6 is a top view of a partial structure of the wireless transmission system 10 when viewed in the first direction D1 in FIG. 1 according to an embodiment of the present disclosure.
FIG. 7 is a schematic top view of a partial structure of the wireless transmission system 10 when viewed in the first direction D1 in FIG. 1 according to another embodiment of the present disclosure.

### DETAILED DESCRIPTION OF THE INVENTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are in direct contact, and may also include embodiments in which additional features may be disposed between the first and second features, such that the first and second features may not be in direct contact.

In addition, the present disclosure may repeat reference numerals and/or letters in the various examples. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are in direct contact, and may also include embodiments in which additional features may be disposed interposing the features, such that the features may not be in direct contact. In addition, spatially relative terms, for example, "vertical," "above," "over," "below,", "bottom," etc. as well as derivatives thereof (e.g., "downwardly," "upwardly," etc.) are used in the present disclosure for ease of description of one feature's relationship to another feature. The spatially relative terms are intended to cover different orientations of the device, including the features.

Unless defined otherwise, all technical and scientific terms used herein have the same meaning as commonly understood by one of ordinary skill in the art to which this disclosure belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

Use of ordinal terms such as "first", "second", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

In addition, in some embodiments of the present disclosure, terms concerning attachments, coupling and the like, such as "connected" and "interconnected", refer to a relationship wherein structures are secured or attached to one another either directly or indirectly through intervening structures, as well as both movable or rigid attachments or relationships, unless expressly described otherwise.

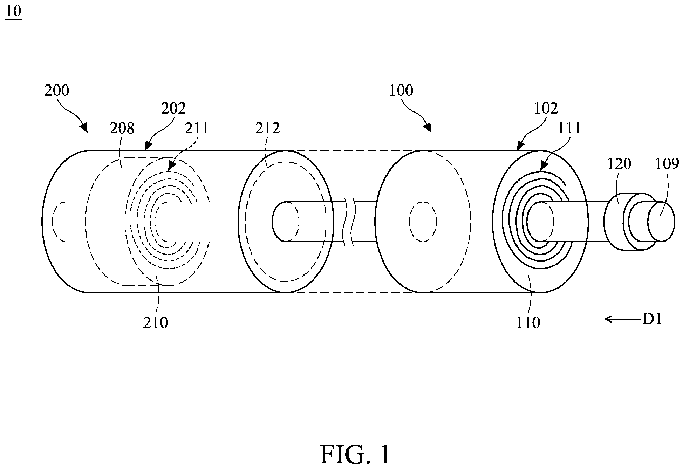

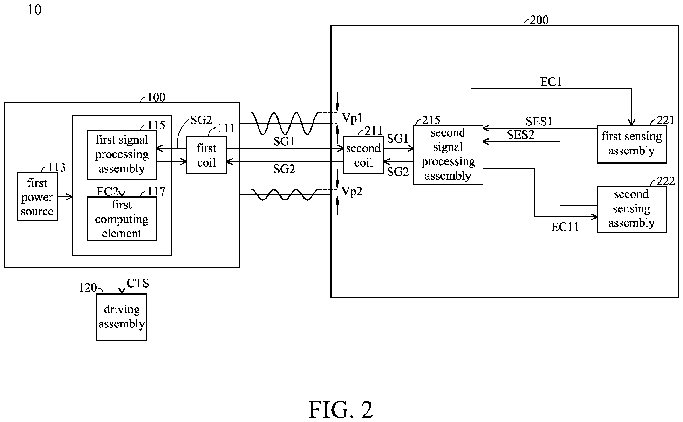

Please refer to FIG. 1 and FIG. 2. FIG. 1 is a schematic diagram of a wireless transmission system 10 according to an embodiment of the present disclosure, and FIG. 2 is a functional block diagram of the wireless transmission system 10 according to an embodiment of the present disclosure. As shown in FIG. 1, the wireless transmission system 10 is a wireless transmission system that can be used to transmit energy or signals. In this embodiment, the wireless transmission system 10 may include a first transmission module 100 and a second transmission module 200.

The first transmission module 100 may have a first coil 111, the second transmission module 200 may have a second coil 211, and the first transmission module 100 is configured to transmit a first signal SG1 to the second coil 211 of the second transmission module 200 via the first coil 111.

In this embodiment, the first transmission module 100 may further have a first casing 102. At least a portion of the first casing 102 is located between the first coil 111 and the second coil 211, and the first casing 102 has non-metallic material, such as plastic material, but it is not limited thereto.

Similarly, the second transmission module 200 may have a second casing 202. At least a portion of the second casing 202 is located between the first coil 111 and the second coil 211, and the second casing 202 has non-metallic material, such as plastic material, but it is not limited thereto.

Furthermore, as shown in FIG. 1, the first transmission module 100 may further include a first circuit board 110. The first circuit board 110 is fixedly disposed on the first casing 102, and the first coil 111 is disposed on the first circuit board 110. The first circuit board 110 is disposed on the inner wall surface or the outer wall surface of the first casing 102, and the first circuit board 110 is, for example, a flexible circuit board, but it is not limited thereto.

Similarly, the second transmission module 200 may further include a base 208 and a second circuit board 210. The second circuit board 210 is fixedly disposed on the base 208, and the second coil 211 is disposed on the second circuit board 210. The second circuit board 210 is, for example, a flexible circuit board, but it is not limited thereto.

As shown in FIG. 1, the wireless transmission system 10 may further include a shaft member 109 and a driving assembly 120. The shaft member 109 passes through the first casing 102 and the second casing 202 and is connected to the base 208. The driving assembly 120 is configured to drive the first transmission module 100 and the second transmission module 200 to move relative to each other. For example, the driving assembly 120 can be connected to the shaft member 109 for driving, and the driving assembly 120 can be, for example, a voice coil motor, but they are not limited thereto.

In this embodiment, the base 208 is fixedly connected to the shaft member 109, and the driving assembly 120 can drive the base 208 to rotate relative to the first transmission module 100 around the shaft member 109. But the configuration of base 208 is not limited to this. For example, the base 208 can also be affixed to the second casing 202, so that the driving assembly 120 can drive the second transmission module 200 to move relative to the first transmission module 100.

In this embodiment, the first transmission module 100 can be a stator, which can be affixed to another casing (not shown in the figures), and the base 208 or the second transmission module 200 can be a rotor, but they are not limited thereto. In addition, in other embodiments, the driving assembly 120 may be disposed in the second casing 202 to drive the base 208.

In some embodiments, the first casing 102 and the second casing 202 can be movably connected to each other, or the first casing 102 and the second casing 202 can be integrally formed as one piece. In some embodiments, the wireless transmission system 10 may be part of the driving mechanism of an electric bicycle, or may be part of a fishing reel, but it is not limited thereto.

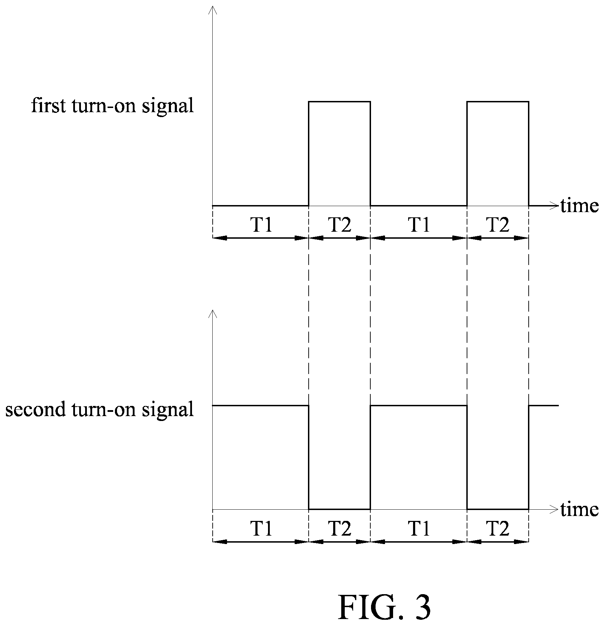

Next, please continue to refer to FIG. 2 and FIG. 3, and FIG. 3 is a signal diagram of a first turn-on signal and a second turn-on signal relative to time according to an embodiment of the present disclosure. As shown in FIG. 2, the first transmission module 100 may further include a first power source 113 and a first signal processing assembly 115, and the first signal processing assembly 115 is configured to control the first coil 111. For example, the first power source 113 can be a battery or an external mains power, and the first signal processing assembly 115 can be a processing circuit or a processing chip, which can be used to process signals, decode signals, or determine the timing of signal processing, and so on.

Similarly, the second transmission module 200 may further include a second signal processing assembly 215 and a first sensing assembly 221, and the second signal processing assembly 215 is configured to control the second coil 211. The first sensing assembly 221 is configured to output a first sensing signal SES1 to the second signal processing assembly 215. For example, the first sensing assembly 221 is a sensor, which is disposed on the base 208 or the second circuit board 210 and configured to sense the rotation speed of the base 208, but it is not limited thereto.

Similar to the first signal SG1, the second transmission module 200 is configured to transmit a second signal SG2 to the first coil 111 of the first transmission module 100 via the second coil 211. Specifically, when the wireless transmission system 10 is in a turn-on mode (that is, when the wireless transmission system 10 is turned on), the first signal SG1 will continue to be transmitted to the second coil 211 via the first coil 111, and when the wireless transmission system 10 is in the turn-on mode, the second signal SG2 will also continue to be transmitted to the first coil 111 via the second coil 211.

Next, as shown in FIG. 3, the first transmission module 100 and the second transmission module 200 operate according to the first turn-on signal and the second turn-on signal respectively. The first turn-on signal and the second turn-on signal can be generated by turn-on signal generating circuits in the first signal processing assembly 115 and the second signal processing assembly 215 respectively. The first turn-on signal and the second turn-on signal are, for example, continuous square wave signal, but they are not limited thereto.

In this embodiment, when the wireless transmission system 10 is in a first time section T1, the second signal processing assembly 215 converts the first signal SG1 into a first electrical signal EC1 according to the second turn-on signal.

The first electrical signal EC1 is directly input to the first sensing assembly 221. That is, the first electrical signal EC1 can be provided as power to the first sensing assembly 221 to cause the first sensing assembly 221 to operate for sensing.

It is worth mentioning that the power required by the first sensing assembly 221 (that is, the first electrical signal EC1) is provided directly by the second signal processing assembly 215, and does not pass through any power storage components between the first sensing assembly 221 and the second signal processing assembly 215, such as no battery or no capacitor that stores electricity, and so on. The second signal processing assembly 215 is configured to provide power to the first sensing assembly 221 in the first time section T1.

Furthermore, the first transmission module 100 further includes a first computing element 117, and when the wireless transmission system 10 is in a second time section T2 that is different from the first time section T1, the first signal processing assembly 115 will convert the second signal SG2 into a second electrical signal EC2 and input the second electrical signal EC2 to the first computing element 117. The first computing element 117 may be, for example, a circuit or a chip for computing.

In some embodiments, the first signal processing assembly 115 and the first computing element 117 may be integrally formed as one piece. That is, the first signal processing assembly 115 and the first computing element 117 can be implemented by the same circuit. For example, both of them can be implemented by a single microcontroller unit.

In addition, in this embodiment, as shown in FIG. 2, the first signal SG1 and the second signal SG2 can be sinusoidal signals, but they are not limited thereto. The extreme value of the first signal SG1 (for example, the wave peak Vp1) is different from the extreme value of the second signal SG2 (for example, the wave peak Vp2). For example, the extreme value of the first signal SG1 is greater than the extreme value of the second signal SG2, and the extreme value of the first signal SG1 is at least twice the extreme value of the second signal SG2.

It is worth noting that when the wireless transmission system 10 is in the turn-on mode, the first time section T1 and the second time section T2 alternate, and the length of the first time section T1 is different from the length of the second time section T2.

For example, because the second transmission module 200 of this embodiment is not provided with a battery, the length of the first time section T1 that provides power to the first sensing assembly 221 is greater than the length of the second time section T2 so as to ensure that the first sensing assembly 221 can operate normally.

Furthermore, as shown in FIG. 2, the second transmission module 200 may further include a second sensing assembly 222 which is disposed on the second circuit board 210 and configured to output a second sensing signal SES2 to the second signal processing assembly 215. For example, the second sensing assembly 222 is a sensor, which is disposed on the base 208 and configured to sense the torque of the base 208, but it is not limited thereto.

Similarly, the second signal processing assembly 215 also converts the first signal SG1 into another electrical signal EC11 according to the second turn-on signal to provide power to the second sensing assembly 222 so as to enable the second sensing assembly 222 to operate to sense. Similarly, there is no power storage component between the second sensing assembly 222 and the second signal processing assembly 215, such as no battery or no capacitor for storing power.

In this embodiment, the second signal processing assembly 215 outputs the second signal SG2 according to the first sensing signal SES1 and the second sensing signal SES2. Furthermore, the second signal processing assembly 215 also outputs the second signal SG2 according to a preset information. The preset information is measured and defined by an external device and then recorded to the second signal processing assembly 215 of the second transmission module 200. For example, the preset information may include condition information such as rotation speed and torque, and so on.

After the first signal processing assembly 115 receives the second signal SG2 through the first coil 111, it sends the second electrical signal EC2 to the first computing element 117. Then, the driving assembly 120 is configured to operate according to a driving signal CTS output by the first computing element 117 of the first transmission module 100.

That is, the first computing element 117 of the first transmission module 100 is configured to output the driving signal CTS according to the second electrical signal EC2.

The aforementioned preset information may include a plurality of conditions for determination by the second signal processing assembly 215. For example, when the second signal processing assembly 215 determines that the first sensing signal SES1 meets a first condition according to the preset information, the second signal processing assembly 215 outputs the second signal SG2 including first mode information to the first signal processing assembly 115.

Similarly, when the second signal processing assembly 215 determines that the second sensing signal SES2 meets the first condition, the second signal processing assembly 215 also outputs the second signal SG2 including the first mode information to the first signal processing assembly 115 according to the preset information. The first condition is, for example, that the rotation speed of the second transmission module 200 is lower than a first preset rotation speed and the torque is higher than a first preset torque.

Therefore, when the first transmission module 100 receives the second signal SG2 including the first mode information, the first signal processing assembly 115 and the first computing element 117 control the driving assembly 120 to drive the first transmission module 100 and the second transmission module 200 to move relative to each other in a first mode. For example, in the first mode, the driving assembly 120 outputs auxiliary power to increase the rotation speed of the second transmission module 200.

On the other hand, when the second signal processing assembly 215 determines that the first sensing signal SES1 meets a second condition according to the preset information, the second signal processing assembly 215 outputs the second signal SG2 including second mode information to the first signal processing assembly 115.

Similarly, when the second signal processing assembly 215 determines that the second sensing signal SES2 meets the second condition, the second signal processing assembly 215 also outputs the second signal SG2 including the second mode information to the first signal processing assembly 115 according to the preset information. The second condition is, for example, that the rotation speed of the second transmission module 200 is higher than a second preset rotation speed and the torque is lower than a second preset torque.

Therefore, when the first transmission module 100 receives the second signal SG2 including the second mode information, the first signal processing assembly 115 and the first computing element 117 will control the driving assembly 120 to drive the first transmission module 100 and the second transmission module 200 to move relative to each other in a second mode. For example, in the second mode, the driving assembly 120 reduces the output auxiliary power to reduce the rotation speed of the second transmission module 200.

In addition, in other embodiments, when the second signal processing assembly 215 determines that the first sensing signal SES1 meets a third condition according to the preset information, the second signal processing assembly 215 outputs the second signal SG2 including third mode information to the first signal processing assembly 115.

Then, when the first transmission module 100 receives the second signal SG2 including the third mode information, the first transmission module 100 outputs the first signal SG1 in a third mode. In this embodiment, the third condition is, for example, that the rotation speed of the second transmission module 200 is higher than a third preset rotation speed, and the third preset rotation speed may be greater than the first preset rotation speed and the second preset rotation speed, but it is not limited thereto.

When the rotation speed of the second transmission module 200 is relatively high (for example, higher than 100 rpm, 500 rpm, or 5000 rpm, depending on the device used, or the distance between the first transmission module 100 and the second transmission module 200, and other factors), the signal transmission between the first transmission module 100 and the second transmission module 200 may be affected. Therefore, in the third mode, the first transmission module 100 will increase the power, frequency or extreme value of the output first signal SG1 to ensure that the second transmission module 200 can correctly receive the first signal SG1.

Similarly, when the second signal processing assembly 215 determines that the first sensing signal SES1 meets a fourth condition according to the preset information, the second signal processing assembly 215 outputs the second signal SG2 including fourth mode information to the first signal processing assembly 115.

When the first transmission module 100 receives the second signal SG2 including the fourth mode information, the first transmission module 100 outputs the first signal SG1 in a fourth mode. In this embodiment, the fourth condition is, for example, that the rotation speed of the second transmission module 200 is lower than a fourth preset rotation speed, and the fourth preset rotation speed is lower than the third preset rotation speed, but it is not limited thereto.

Because the rotation speed of the second transmission module 200 decreases, the signal transmission between the first transmission module 100 and the second transmission module 200 is less affected. Therefore, in the fourth mode, the first transmission module 100 can reduce the power, frequency or extreme value of the output first signal SG1 to reduce the power consumption of the first transmission module 100.

The first signal SG1 is different from the second signal SG2. For example, in addition to the extreme value of the first signal SG1 being greater than the extreme value of the second signal SG2, the frequencies and/or powers of the first signal SG1 and the second signal SG2 may also be different.

In addition, it is worth noting that the comparison operation between the aforementioned preset information and the sensing signal is performed by the second signal processing assembly 215, but it is not limited thereto. In other embodiments, the second signal processing assembly 215 can also integrate the aforementioned multiple sensing signals into the second signal SG and transmit them to the first signal processing assembly 115. Then, the first signal processing assembly 115 compares and determines according to the multiple sensing signals and the preset information, and then executes subsequent procedures.

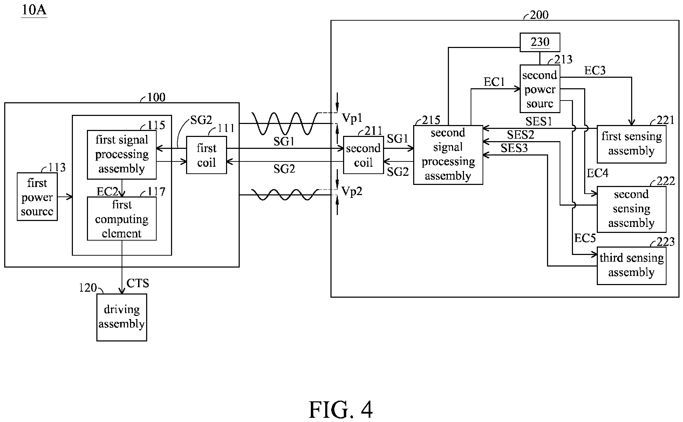

Next, please refer to FIG. 4. FIG. 4 is a functional block diagram of a wireless transmission system 10A according to another embodiment of the present disclosure. This embodiment is similar to the previous embodiment, the difference is that the second transmission module 200 of this embodiment may further include a second power source 213, and the second signal processing assembly 215 is configured to transmit the first electrical signal EC1 to the second power source 213.

The second power source 213 is, for example, an electronic component such as a battery or a capacitor that can store power, but it is not limited thereto. The second power source 213 is configured to output a third electrical signal EC3 to the first sensing assembly 221 so that the first sensing assembly 221 can operate normally. In addition, in this embodiment, the second transmission module 200 may further include a third sensing assembly 223.

Similarly, the second power source 213 is configured to output a fourth electrical signal EC4 and a fifth electrical signal EC5 to the second sensing assembly 222 and the third sensing assembly 223 respectively, so that the second sensing assembly 222 and the third sensing assembly 223 can operate normally.

In this embodiment, the third sensing assembly 223 is configured to sense the power of the second power source 213 and to correspondingly output a third sensing signal SES3 to the second signal processing assembly 215, and the second signal processing assembly 215 is configured to monitor the power of the second power source 213 according to the third sensing signal SES3.

In this embodiment, when the first transmission module 100 does not transmit the first signal SG1 to the second transmission module 200 (that is, when the wireless transmission system 10A is not in the turn-on mode), the maximum power of the second power source 213 of the second transmission module 200 is less than 200 mAh.

In this embodiment, the second transmission module 200 may further include a security assembly 230 which is electrically connected to the second power source 213. When the first transmission module 100 does not transmit the first signal SG1 to the second transmission module 200 for more than a first preset time, the second signal processing assembly 215 will control the security assembly 230 to turn on, so that the security assembly 230 discharges the power of the second power source 213 in a second preset time to a safety value. The second signal processing assembly 215 is configured to monitor and determine whether the power of the second power source 213 reaches the aforementioned safety value according to the third sensing signal SES3.

The security assembly 230 is, for example, a resistor, but it is not limited thereto. The security assembly 230 is configured to convert the electrical energy of the second power source 213 into thermal energy. Furthermore, the first preset time may be less than 6 hours, the second preset time may be less than 1 hour, and the safety value may be defined as half of the maximum power of the second power source 213.

Based on this configuration, when the wireless transmission system 10A is placed outdoors or in a car and is not used, the probability of danger caused by the second power source 213 can be reduced, thereby increasing the safety of the wireless transmission system 10A.

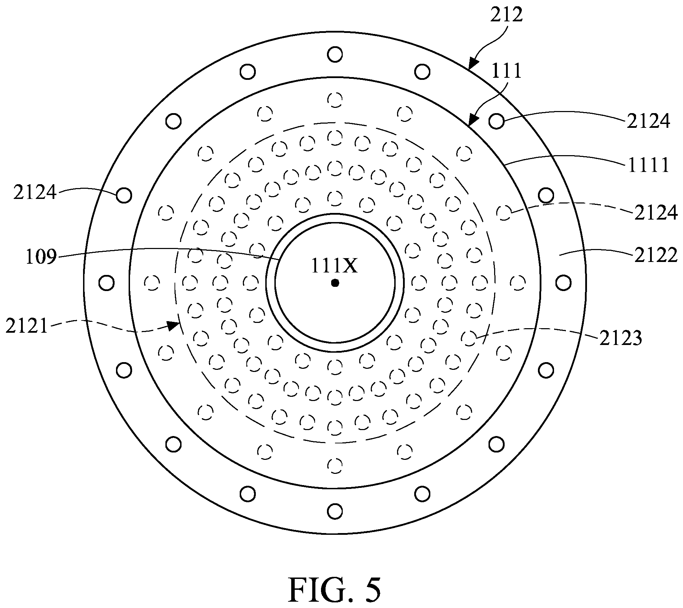

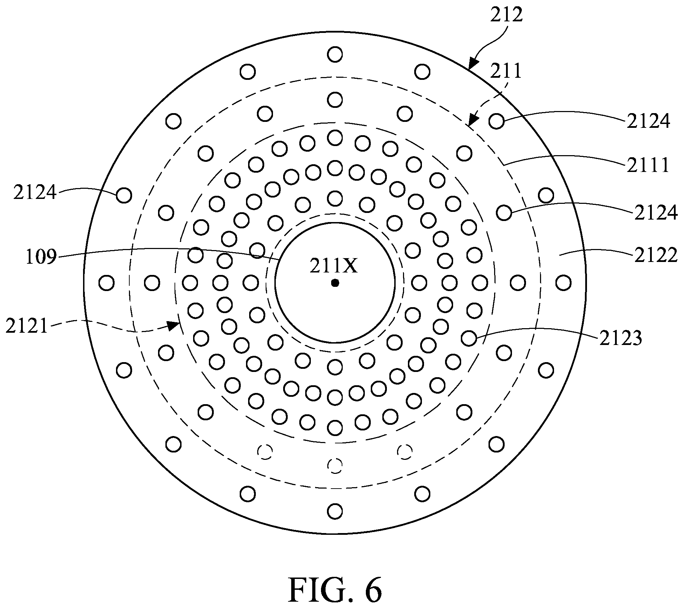

Next, please refer to FIG. 1, FIG. 5 and FIG. 6. FIG. 5 is a top view of a partial structure of the wireless transmission system 10 when viewed in a first direction D1 in FIG. 1 according to an embodiment of the present disclosure, and FIG. 6 is a top view of a partial structure of the wireless transmission system 10 when viewed in the first direction D1 in FIG. 1 according to an embodiment of the present disclosure.

As shown in FIG. 1, the wireless transmission system 10 further includes a separating member 212, which is disposed between the first coil 111 and the second coil 211. In this embodiment, the separating member 212 is disposed on the second casing 202, but it is not limited thereto. In other embodiments, the separating member 212 may be disposed on the first casing 102.

Specifically, at least a portion of the separating member 212 is embedded in the first casing 102 or the second casing 202. For example, the separating member 212 is embedded in the inner wall surface of the first casing 102 or the second casing 202, and the separating member 212 may be made of metal material.

In order to help the first coil 111 and the second coil 211 to transmit signals stably, in this embodiment, the frequency of the first signal SG1 with periodicity is greater than 1 MHz, and the frequency of the second signal SG2 with periodicity is greater than 1MHz. For example, the first coil 111 and the second coil 211 can communicate using a Near Field Communication (NFC) mode, and the frequency of the first signal SG1 and the second signal SG2 can be 13.56 MHz, but they are not limited thereto.

Furthermore, the separating member 212 has a plurality of perforations, and some of them are evenly arranged on the separating member 212. As shown in FIG. 5, when viewed along the winding axis 111X of the first coil 111, the boundary 1111 of the first coil 111 surrounds and defines a first area, and when viewed along the winding axis 111X of the first coil 111, the area of the metal part of the separating member 212 is less than half of the first area.

Similarly, as shown in FIG. 6, when viewed along the winding axis 211X of the second coil 211, the boundary 2111 of the second coil 211 surrounds and defines a second area, and when viewed along the winding axis 211X of the second coil 211, the area of the metal part of the separating member 212 is less than half of the second area. The winding axis 211X can overlap the winding axis 111X.

In order to achieve the proportional relationship between the above-mentioned first area, the second area and the area of the metal part of the separating member 212, the configuration of the above-mentioned plurality of perforations is described as follows. As shown in FIG. 5 and FIG. 6, the separating member 212 can define a first block 2121 and a second block 2122. The first block 2121 has a ring-shaped structure and has a third area, and the second block 2122 also has a ring-shaped structure which surrounds the first block 2121 and has a fourth area.

The perforations on the separating member 212 may include a plurality of first perforation 2123 and a plurality of second perforation 2124, which are respectively arranged in the first block 2121 and the second block 2122, and the ratio of the total area of these first perforations 2123 to the third area is different from the ratio of the total area of the second perforations 2124 to the fourth area. For example, the ratio of the total area of the first perforations 2123 to the third area is greater than the ratio of the total area of the second perforations 2124 to the fourth area.

Based on this configuration, the proportion of metal of the separating member 212 in the first block 2121 is different from the proportion of metal of the separating member 212 in the second block 2122. Specifically, the proportion of metal of the separating member 212 in the first block 2121 is less than the proportion of metal of the separating member 212 in the second block 2122.

Based on the configuration of the above-mentioned separating member 212 and the above-mentioned perforations, even if the separating member 212 is made of metal material, the first coil 111 and the second coil 211 can still transmit signals stably, and based on the configuration of the separating member 212, the overall structural strength of the second casing 202 can be increased to ensure that there is no damage when the second transmission module 200 rotates at high speed.

It is worth noting that the size of the aforementioned first perforation 2123 is the same as the size of the second perforation 2124, and the shapes of both are circular, but they are not limited thereto. In other embodiments, the size of the first perforation 2123 and the size of the second perforation 2124 may be different. In addition, because the separating member 212 can be partially embedded in the inner wall surface of the second casing 202, the aforementioned perforations can include a portion of the inner wall surface. That is, the perforation can be filled with a part of the second casing 202 which is made of plastic material.

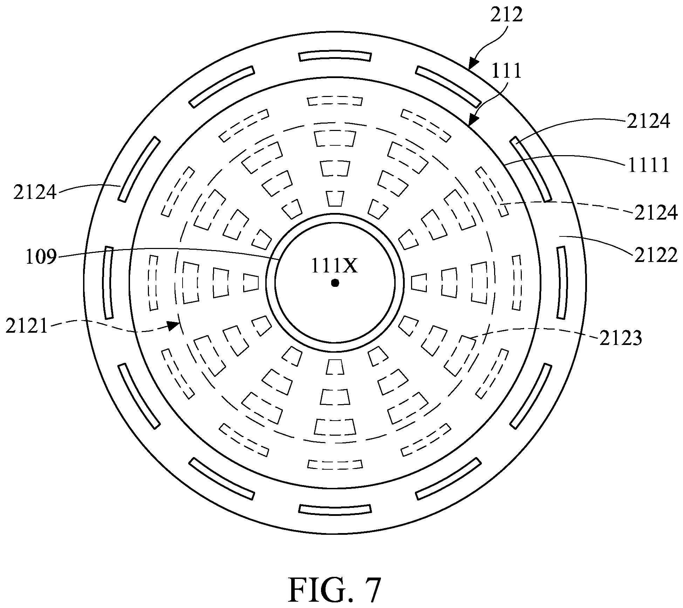

For example, please refer to FIG. 7. FIG. 7 is a schematic top view of a partial structure of the wireless transmission system 10 when viewed in the first direction D1 in FIG. 1 according to another embodiment of the present disclosure. As shown in FIG. 7, in this embodiment, the first perforations 2123 and the second perforations 2124 may each have a fan-shaped structure, and the sizes of the first perforation 2123 and the second perforation 2124 are different.

The size and shape of the first perforation 2123 and the second perforation 2124 are not limited to the aforementioned circular structure or fan-shaped structure. As long as the first coil 111 and the second coil 211 can stably transmit signals, the size and shape are within the scope of the present disclosure.

The present disclosure provides a wireless transmission system 10, including a first transmission module 100 and a second transmission module 200. The second transmission module 200 is movably connected to the first transmission module 100. The first transmission module 100 is configured to transmit a first signal SG1 to the second coil 211 of the second transmission module 200 via the first coil 111. The second signal processing assembly 215 of the second transmission module 200 can convert the first signal SG1 into an electrical signal to provide power to one or more sensing assemblies to sense parameters such as rotation speed or torque of the second transmission module 200.

After receiving the sensing signals of these sensing assemblies, the second signal processing assembly 215 determines whether these sensing signals meet specific conditions according to preset information, such as low rotation speed and high torque or high rotation speed and low torque, and so on, and corresponding transmits a second signal SG2 to the first transmission module 100 through the second coil 211. The first transmission module 100 correspondingly controls a driving assembly 120 according to the second signal SG2 to change parameters such as rotation speed or torque of the second transmission module 200.

The wireless transmission system 10 of the present disclosure can be applied to products such as electric bicycles or fishing reels, and can provide auxiliary power to assist the user according to the user's usage situation. Furthermore, because the coil and the electronic components on the rotor (such as the second transmission module 200) do not need external wires for power supply or communication, the problem of the conventional rotating module tearing the wires during rotation can be avoided.

The ordinal numbers in this specification and the claims, such as "first", "second", "third", etc., have no sequential relationship with each other. They are only used to indicate and distinguish between two different components with the same name

Although the embodiments and their advantages have been described in detail, it should be understood that various changes, substitutions, and alterations can be made herein without departing from the spirit and scope of the embodiments as defined by the appended claims. Moreover, the scope of the present application is not intended to be limited to the particular embodiments of the process, machine, manufacture, composition of matter, means, methods, and steps described in the specification. As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein can be utilized according to the disclosure. Accordingly, the appended claims are intended to include within their scope such processes, machines, manufacture, compositions of matter, means, methods, or steps. In addition, each claim constitutes a separate embodiment, and the combination of various claims and embodiments are within the scope of the disclosure.

## Claims

1. A wireless transmission system (10), comprising:
a first transmission module (100), having a first coil (111); and
a second transmission module (200), having a second coil (211) corresponding to the first coil (111);
wherein the first transmission module (100) is configured to transmit a first signal (SG1) to the second coil (211) of the second transmission module (200) through the first coil (111).

2. The wireless transmission system (10) as claimed in claim 1, wherein
the first transmission module (100) includes a first power source (113) and a first signal processing assembly (115);
the first signal processing assembly (115) is configured to control the first coil (111);
the second transmission module (200) includes a second signal processing assembly (215) and a first sensing assembly (221);
the second signal processing assembly (215) is configured to control the second coil (211);
the first sensing assembly (221) is configured to output a first sensing signal (SES1) to the second signal processing assembly (215);
the second transmission module (200) is configured to transmit a second signal (SG2) to the first coil (111) of the first transmission module (100) via the second coil (211);
when the wireless transmission system (10) is in a first time section (T1), the second signal processing assembly (215) converts the first signal (SG1) into a first electrical signal (EC1);
the first electrical signal (EC1) is optionally input to the first sensing assembly (221); and
the first transmission module (100) further includes a first computing element (117).

3. The wireless transmission system (10) as claimed in claim 2, wherein
when the wireless transmission system (10) is in a second time section (T2) which is different from the first time section (T1), the first signal processing assembly (115) converts the second signal (SG2) into a second electrical signal (EC2) and inputs the second electrical signal (EC2) to the first computing element (117);
an extreme value of the first signal (SG1) is different from an extreme value of the second signal (SG2);
the extreme value of the first signal (SG1) is greater than the extreme value of the second signal (SG2); and
the extreme value of the first signal (SG1) is at least twice the extreme value of the second signal (SG2).

4. The wireless transmission system (10) as claimed in claim 3, wherein
the second transmission module (200) further includes a second sensing assembly (222) which is configured to output a second sensing signal (SES2) to the second signal processing assembly (215);
the second signal processing assembly (215) outputs the second signal according to the first sensing signal (SES1) and the second sensing signal (SES2);
the second signal processing assembly (215) outputs the second signal (SG2) according to preset information; and
the preset information is measured and defined by an external device and then recorded to the second transmission module (200).

5. The wireless transmission system (10) as claimed in claim 4, wherein
the wireless transmission system (10) further includes a driving assembly (120) configured to drive the first transmission module (100) and the second transmission module (200) to move relative to each other;
the driving assembly (120) is configured to operate according to a driving signal (CTS) output by the first computing element (117) of the first transmission module (100); and
the first transmission module (100) is configured to output the driving signal (CTS) according to the second electrical signal (EC2).

6. The wireless transmission system (10) as claimed in claim 5, wherein
when the second signal processing assembly (215) determines that the first sensing signal (SES1) meets a first condition according to the preset information, the second signal processing assembly (215) outputs the second signal (SG2) including first mode information to the first signal processing assembly (115);
when the second sensing signal (SES2) meets the first condition, the second signal processing assembly (215) outputs the second signal including the first mode information to the first signal processing assembly (115) according to the preset information; and
when the first transmission module (100) receives the second signal including the first mode information, the driving assembly (120) drives the first transmission module (100) and the second transmission module (200) to move relative to each other in a first mode.

7. The wireless transmission system as claimed in claim 6, wherein
when the second signal processing assembly (215) determines that the first sensing signal (SES1) meets a second condition according to the preset information, the second signal processing assembly (215) outputs the second signal including second mode information to the first signal processing assembly (115);
when the second sensing signal (SES2) meets the second condition, the second signal processing assembly (215) outputs the second signal including the second mode information to the first signal processing assembly (115) according to the preset information; and
when the first transmission module (100) receives the second signal including the second mode information, the driving assembly (120) drives the first transmission module (100) and the second transmission module (200) to move relative to each other in a second mode.

8. The wireless transmission system (10) as claimed in claim 7, wherein
when the second signal processing assembly (215) determines that the first sensing signal (SES1) meets a third condition according to the preset information, the second signal processing assembly (215) outputs the second signal (SG2) including third mode information to the first signal processing assembly (115); and
when the first transmission module (100) receives the second signal (SG2) including the third mode information, the first transmission module (100) outputs the first signal (SG1) in a third mode.

9. The wireless transmission system (10) as claimed in claim 8, wherein
when the second signal processing assembly (215) determines that the first sensing signal (SES1) meets a fourth condition according to the preset information, the second signal processing assembly (215) outputs the second signal (SG2) including fourth mode information to the first signal processing assembly (115);
when the first transmission module (100) receives the second signal (SG2) including the fourth mode information, the first transmission module (100) outputs the first signal (SG1) in a fourth mode; and
the first signal (SG1) is different from the second signal (SG2).

10. The wireless transmission system as claimed in any one of claims 3 to 9, wherein
power required by the first sensing assembly (221) is provided directly by the second signal processing assembly (215) and does not pass through any power storage components between the first sensing assembly (221) and the second signal processing assembly (215);
the second signal processing assembly (215) is configured to provide power to the first sensing assembly (221) in the first time section (T1); and
a length of the first time section (T1) is different from a length of the second time section (T2);
the length of the first time section (T1) is greater than the length of the second time section (T2);
the first signal processing assembly (115) and the first computing element (117) are integrally formed as one piece;
when the wireless transmission system (10) is in a turn-on mode, the first signal (SG1) continues to be transmitted to the second coil (211) via the first coil (111);
when the wireless transmission system (10) is in the turn-on mode, the second signal (SG2) continues to be transmitted to the first coil (111) via the second coil (211); and
when the wireless transmission system (10) is in the turn-on mode, the first time section (T1) and the second time section (T2) alternate.

11. The wireless transmission system (10) as claimed in any one of claims 4 to 9, wherein
the second transmission module (200) further includes a second power source (213), and the second signal processing assembly (215) transmits the first electrical signal (EC1) to the second power source (213);
the second power source (213) outputs a third electrical signal (EC3) to the first sensing assembly (221);
the second transmission module (200) further includes a third sensing assembly (223);
the second power source (213) is configured to output a fourth electrical signal (EC4) and a fifth electrical signal (EC5) to the second sensing assembly (222) and the third sensing assembly (223) respectively;
the third sensing assembly (223) is configured to sense power of the second power source (213) and to correspondingly output a third sensing signal (SES3) to the second signal processing assembly (215);
the second signal processing assembly (215) is configured to monitor the power of the second power source (213) according to the third sensing signal (SES3); and
when the first transmission module (100) does not transmit the first signal (SG1) to the second transmission module (200), a maximum power of the second power source (213) of the second transmission module (200) is less than 200mAh.

12. The wireless transmission system (10) as claimed in claim 11, wherein
the second transmission module (200) further includes a security assembly (230) which is electrically connected to the second power source (213);
when the first transmission module (100) does not transmit the first signal (SG1) to the second transmission module (200) for more than a first preset time, the security assembly (230) discharges the power of the second power source (213) to a safety value in a second preset time; and
the security assembly (230) is configured to convert electrical energy of the second power source (213) into thermal energy;
the first preset time is less than 6 hours;
the second preset time is less than 1 hour;
the safety value is defined as half of the maximum power of the second power source (213); and
the second signal processing assembly (215) is configured to monitor and determine whether the power of the second power source (213) reaches the safety value according to the third sensing signal (SES3).

13. The wireless transmission system (10) as claimed in any one of claims 2 to 12, wherein
the wireless transmission system (10) further includes a separating member (212) which is disposed between the first coil (111) and the second coil (211);
the separating member (212) comprises metal material;
a frequency of the first signal (SG1) with periodicity is greater than 1MHz; and
a frequency of the second signal (SG2) with periodicity is greater than 1MHz;
the separating member (212) has a plurality of perforations;
when viewed along the winding axis of the first coil (111), a boundary of the first coil (111) surrounds and defines a first area;
when viewed along the winding axis of the first coil (111), an area of a metal part of the separating member (212) is less than half of the first area;
when viewed along the winding axis of the second coil (211), a boundary of the second coil (211) surrounds and defines a second area; and
when viewed along the winding axis of the second coil (211), the area of the metal part of the separating member (212) is less than half of the second area.

14. The wireless transmission system (10) as claimed in claim 13, wherein
the separating member (212) defines a first block (2121) and a second block (2122);
the first block (2121) has a third area;
the second block (2122) surrounds the first block (2121) and has a fourth area; and
proportion of metal of the separating member (212) in the first block (2121) is different from a proportion of metal of the separating member (212) in the second block (2122);
the proportion of metal of the separating member (212) in the first block (2121) is less than the proportion of metal of the separating member (212) in the second block (2122);
the perforations include a plurality of first perforations (2123) and a plurality of second perforations (2124), which are respectively arranged in the first block (2121) and the second block (2122);
a ratio of the total area of the first perforations (2123) to the third area is different from a ratio of the total area of the second perforations (2124) to the fourth area; and
the ratio of the total area of the first perforations (2123) to the third area is greater than the ratio of the total area of the second perforations (2124) to the fourth area.

15. The wireless transmission system (10) as claimed in claim 13 or 14, wherein
the first transmission module (100) has a first casing (102);
at least a portion of the first casing (102) is located between the first coil (111) and the second coil (211);
the first casing (102) has non-metallic material;
the second transmission module (200) has a second casing (202);
at least a portion of the second casing (202) is located between the first coil (111) and the second coil (211); and
the second casing (202) has non-metallic material;
the separating member (212) is disposed on the first casing (102) or the second casing (202); and
at least a portion of the separating member (212) is embedded in the first casing (102) or the second casing (202).
